# EUROPÄISCHE PATENTSCHRIFT

(11) **EP 2 601 760 B1**
(45) Veröffentlichungstag und Bekanntmachung des Hinweises auf die Patenterteilung: **05.09.2018**
(21) Anmeldenummer: 11755283.6
(22) Anmeldetag: 27.07.2011
(51) Int. Cl.: H04M 11/02, H04W 24/00, H05B 37/02, H04L 29/12

(54) **VERFAHREN, VORRICHTUNG UND SYSTEM ZUR ADRESSIERUNG VON BETRIEBSGERÄTEN FÜR LEUCHTMITTEL**
METHOD, APPARATUS AND SYSTEM FOR ADDRESSING OPERATING DEVICES FOR LUMINAIRES
PROCÉDÉ, DISPOSITIF ET SYSTÈME POUR L'ADRESSAGE D'APPAREILS DE FONCTIONNEMENT DESTINÉS À DES SOURCES LUMINEUSES

(30) Priorität: 02.08.2010 DE 102010038792
(43) Veröffentlichungstag der Anmeldung: 12.06.2013
(73) Patentinhaber: Tridonic GmbH & Co KG, 6851 Dornbirn (AT)
(72) Erfinder: ZUDRELL-KOCH, Stefan, A-6845 Hohenems (AT)
(74) Vertreter: Rupp, Christian
(86) Internationale Anmeldenummer: PCT/EP2011/062884
(87) Internationale Veröffentlichungsnummer: WO 2012/016893

(56) Entgegenhaltungen:
- EP-A2- 1 659 832
- DE-U1-202006 011 684
- US-A1- 2003 212 684
- US-A1- 2008 218 087
- Ulf Engfeld: "Vergleich zwischen konventioneller Installation und EIB-Technik", , 1. Juli 2003 (2003-07-01), Seiten 1-36, XP55011044, Gefunden im Internet: URL:http://www.eib-home.de/software/vergle ich_eib-und_konventionelle_installation_en gfeld.pdf [gefunden am 2011-11-02]
- ABB: "ABB i-bus EIB / KNX DALI - Gateway DG/S 1.1 Gebäude-Systemtechnik", 1. Januar 2006 (2006-01-01), PRODUKT HANDBUCH ABB, ABB, DE, PAGE(S) 1 - 114, XP007916088, Abschnitte 1, 1.1, 1.2, 3 komplett, 5 komplett
- WOO SUK LEE ET AL: "Implementation of a KNX-ZigBee gateway for home automation", CONSUMER ELECTRONICS, 2009. ISCE '09. IEEE 13TH INTERNATIONAL SYMPOSIUM ON, IEEE, PISCATAWAY, NJ, USA, 25. Mai 2009 (2009-05-25), Seiten 545-549, XP031484448, ISBN: 978-1-4244-2975-2
- J Polk ET AL: "Network Working Group Dynamic Host Configuration Protocol Option for Coordinate-based Location Configuration Information Appendix Calculations of Imprecision possible with the DHC LCI", , 1 January 2004 (2004-01-01), XP055301159, Retrieved from the Internet: URL:https://tools.ietf.org/pdf/rfc3825.pdf

## Beschreibung

Die vorliegende Erfindung bezieht sich auf das Problem der Vergabe von Betriebsadressen an Leuchten/Lampen und die Adressierung von Leuchten/Lampen, insbesondere auf ein Verfahren zur Zuweisung einer Betriebsadresse an ein Betriebsgerät für Leuchtmittel, ein Verfahren zur Ermittlung der Positionen von Betriebsgeräten für Leuchtmittel und einem adressierbaren Betriebsgerät für Leuchtmittel.

Betriebsadressen von Betriebsgeräten für Leuchtmittel, zum Beispiel für Leuchten und Lampen, sind im Allgemeinen unabhängig von dem Ort, an dem die Betriebsgeräte angebracht sind. Positionen von Betriebsgeräten werden im Hinblick auf Bauplänen geplant und angegeben. Problematisch ist hierbei, dass sich die Baupläne häufig ändern, Lichtpläne mit den Positionen, an denen die Betriebsgeräte angebracht werden sollen, aber gelegentlich nicht aktualisiert werden. Es kommt auch vor, dass die Montage der Betriebsgeräte tatsächlich anders erfolgt als geplant. In der Folge stimmen Betriebsgerätpositionen nicht und einzelne Betriebsgeräte können nur schwer aufgefunden werden. Dies erschwert auch die gezielte Ansteuerung von Betriebsgeräten, da erst geprüft werden muss, welches Betriebsgerät sich tatsächlich wo befindet.

Die Erfindung macht es sich daher zur Aufgabe, die Lokalisierung von Betriebsgeräten für Leuchtmittel zu vereinfachen.

### Zusammenfassung der Erfindung

Die Erfindung löst die Aufgaben mit den Vorrichtungen, dem Verfahren und System gemäß den unabhängigen Ansprüchen. Weitere vorteilhafte Ausführungsformen der Erfindung sind in den abhängigen Ansprüchen beschreiben.

In einer Ausführungsform löst die Erfindung das zugrundeliegende Problem durch die Merkmale der unabhängigen Ansprüche.

Das Verfahren kann den Schritt der Übertragung der Betriebsadresse an ein Speichermedium einer Steuereinheit umfassen.

Das Betriebsgerät kann Positionsdaten mit anderen Betriebsgeräten austauschen.

Das Speichermedium kann einen zusätzlichen Identifikator des Betriebsgerätes speichern.

Das Verfahren kann die Schritte umfassen: bestimmen ob die Position eine 2D-Position oder eine 3D-Position ist, im Fall einer 2D-Position: prüfen ob Höheninformationen vorliegen und bei einem Vorliegen kombinieren der Höheninformation mit der 2D-Position und Speichern der Kombination in dem Speichermedium.

In einer weiteren Ausführungsform stellt die Erfindung ein Verfahren zur Ermittlung der Positionen von Betriebsgeräten für Leuchtmittel in einem Bussystem bereit, aufweisend die Schritte: Zuweisung einer Betriebsadresse an ein Betriebsgerät, wie oben beschrieben, und Auslesen der Betriebsadresse und Umsetzung der ausgelesenen Adresse in eine Position einer Leuchte, der das Betriebsgerät zugeordnet ist.

In einem weiteren Aspekt stellt die Erfindung ein busfähiges Betriebsgerät für Leuchtmittel bereit, aufweisend Mittel zur Ermittlung der absoluten oder relativen Position des Betriebsgeräts und/oder eine Schnittstelle zur Kommunikation mit einem externen Positionserfassungsgerät, sowie Mittel zur Umsetzung der erfassten bzw. übermittelten Position in eine Betriebsadresse.

Das Betriebsgerät kann ein Speichermedium aufweisen und/oder damit verbunden sein.

Das Speichermedium kann nicht-flüchtig sein.

Das Betriebsgerät kann Signalisierungsmittel für Funk- und/oder Lichtsignale aufweisen.

Das Betriebsgerät kann ein Verarbeitungsmittel aufweisen, das mit der Schnittstelle verbunden ist und dazu eingerichtet ist, aus über die Schnittstelle erhaltene Daten Positionsdaten zu bestimmen.

Das Betriebsgerät kann dazu eingerichtet sein, über den Kommunikations-Bus mit anderen Betriebsgeräten und oder einer Steuereinheit Positionsdaten auszutauschen.

Das Betriebsgerät kann dazu eingerichtet sein, über die Signalisierungsmittel mit anderen Betriebsgeräten Positionsdaten auszutauschen.

Das Betriebsgerät kann über eine Schnittstelle mit dem Positionserfassungsgerät verbindbar sein.

Das Speichermedium kann dazu eingerichtet sein, zusätzliche Identifikatoren zu speichern.

In noch einem Aspekt stellt die Erfindung ein Positionserfassungsgerät zur Bestimmung einer Position eines Betriebsgerätes für ein Leuchtmittel bereit, mit einer Positionierungseinheit zum Ermitteln von Positionsdaten und einem Kommunikationsmodul zum Übertragen der Positionsdaten an das Betriebsgerät.

Die Positionierungseinheit kann ein Signalempfänger für Funk- und/oder Lichtsignale und/oder ein GPS-Empfänger sein.

Das Positionserfassungsgerät kann weiter eine Anzeige aufweisen.

Das Kommunikationsmodul kann dazu eingerichtet sein, Positionsdaten von Betriebsgeräten in einem Bereich abzufragen und/oder Positionen der Betriebsgeräte anhand der Positionsdaten auf der Anzeige darzustellen.

Das Positionserfassungsgerät kann dazu eingerichtet sein, die Positionen der Betriebsgeräte in Verbindung mit einem Umgebungs-, Raum- und/oder Lageplan darzustellen.

In noch einem weiteren Aspekt stellt die Erfindung ein Positionierungssystem zur Bestimmung einer Position eines Betriebsgerätes für ein Leuchtmittel mit einem Betriebsgerät wie oben beschrieben und einem Positionserfassungsgerät wie oben beschrieben bereit.

Das Positionierungssystem kann dazu eingerichtet ist, ein Verfahren auszuführen, wie es oben beschrieben ist.

Weitere Aspekte der Erfindung werden im Folgenden auch im Hinblick auf die Zeichnungen beschrieben.

### Kurze Beschreibung der Zeichnungen

- Fig. 1: zeigt eine schematische Darstellung einer erfindungsgemäßen Anordnung zur Bestimmung einer Betriebsgerätposition.
- Fig. 2: zeigt ein Flussdiagramm zur erfindungsgemäßen Positionsbestimmung.

### Detaillierte Beschreibung der Erfindung

Der zentrale Gedanke der Erfindung ist, dass die 2D- oder 3D-Position eines Leuchtmittels bzw. eines Betriebsgerätes für Leuchtmittel in eine Betriebsadresse umgesetzt wird. Die Position kann dabei absolut (beispielsweise ermittelt durch GPS) oder relativ (z.B. durch Positionierungsverfahren innerhalb eines Gebäudes oder eines Raums) erfolgen.

Nachdem die die 2D- oder 3D-Position wiedergebende Adresse zentral abgefragt ist, kann ein Lichtplan erstellt werden und beispielsweise eine logische Gruppierung von Leuchtmitteln erfolgen. In Verbindung mit einem Gebäude-, Stockwerks- oder CAD-Elektroplan kann auch auf Basis der abgefragten Positionen eine eindeutige Zuordnung eines Betriebsgerätes für Leuchtmittel zu einer Position erfolgen und seine Lage in dem jeweiligen Plan angegeben werden. Dies kann auch so erfolgen, dass die abgefragten Positionen aus der Betriebsadresse in ein CAD- oder Planungsprogram übernommen werden und dort am entsprechenden Ort angezeigt bzw. der entsprechende Ort/die entsprechenden Orte in den jeweiligen Plan oder eine Zeichnung übernommen werden können.

Die Positionen der Betriebsgeräte können aber beispielweise auch (online) z.B. in ein tragbares Endgerät übertragen werden, um dort angezeigt zu werden. In Verbindung mit einem hinterlegten oder ebenfalls übertragenen Plan können die Betriebsgerätpositionen dann auf dem Endgerät an entsprechender Stelle in dem Plan dargestellt werden.

Die Erfindung ermöglicht es somit, einzelne Betriebsgeräte für Leuchtmittel oder bestimmte Gruppen von Betriebsgeräten für Leuchtmittel zu lokalisieren.

Zusammen mit einer Betriebsgerätposition kann auch eine Statusinformation zu einem Leuchtmittel, z.B. von einer zentralen Steuereinheit, an das Endgerät übermittelt werden. Dieser Status kann dann zusammen mit der Leuchtmittelposition z.B. auf dem mobilen Endgerät angezeigt werden. Auch kann von einem Betriebsgerät eine Statusinformation, z.B. eine Zustandsänderung, zusammen mit der Betriebsadresse, die die Position enthält, an eine Steuereinheit übermittelt werden. Durch diese kann dann der Status/die Zustandsänderung angezeigt werden.

Um die Position eines Betriebsgeräts zu ermitteln, können bekannte Positionierungsverfahren, beispielsweise Innen-Positionierungsverfahren, zum Einsatz kommen.

Ein Ansatz zur Positionsbestimmung im Innenbereich basiert auf einer Verwendung von Infrarot-Sendern und -Empfänger(n) . Die Infrarot-Sender senden ein Signal aus, das von dem Empfänger als eine Position ausgewertet werden kann. Zur besonders exakten Positionsbestimmung kommen auch Infrarot-Laser, die eine stark gebündelte Infrarot-Strahlung abgeben und eine sehr präzise Messung erlauben, zur Anwendung.

Weiter sind Ultraschall-Positionierungssysteme bekannt. Bei ihrer Verwendung werden Laufzeitmessungen von ausgesendeten Ultraschallimpulsen genutzt, um damit eine Entfernung von Sender zu Empfänger zu messen und so eine Position (durch Trilateration) bestimmen zu können. Die Signale können dabei entweder von einem mobilen Sender ausgesendet und von fest installierten Empfängern empfangen werden oder es werden umgekehrt von fest angebrachten Sendern Signale ausgesendet, die von beweglichen Empfängern detektiert werden. Es kann auch ein Radiofrequenzsignal zu Hilfe genommen werden, um eine Position zu identifizieren. Da sich Radiofrequenzen schneller ausbreiten als Ultraschall, können so beispielsweise mit einem "Time Difference Of Arrival"-Verfahren Streckenlängen gewonnen und Positionen bestimmt werden.

Mit Hilfe von RFID (Radio Frequency Identification) lassen sich ebenfalls Positionen von Betriebsgeräten in Räumen bestimmen. Hierbei kann ein Transponder an dem zu identifizierenden Betriebsgerät angebracht werden, der dann von einem Lesegerät erkannt werden kann. Man unterscheidet dabei zwischen passiven Transpondern, ohne eigene Energieversorgung, und aktiven Transpondern, welche mit einer Energieversorgung ausgestattet sind. Passive Transponder beziehen Energie aus einem sie umgebenden Feld, welches z.B. von einem Lesegerät erzeugt wird. Aktive Systeme erreichen eine größere Reichweite als passive Systeme, weshalb sie besonders für den Einsatz als Positionierungssystem geeignet sind. RFID-Systeme haben außerdem den Vorteil, dass die Anzahl der zu verwendenden RFID-Transponder nahezu unbegrenzt ist.

Hier kommt ein signalstärke-basiertes Verfahren zur Lokalisierung der Betriebsgeräte in Frage.

Bluetooth und andere Datenfunktechniken (WLAN, ZigBee) nutzen hochfrequente elektromagnetische Wellen zur Kommunikation. Je nach Sendeleistung und Umgebung sind bei diesen Systemen große Reichweiten (z.B. bis zu 100m) möglich, wodurch sie sich auch für eine Positionsbestimmung in großen Räumen eignen. Hier ist eine Positionsbestimmung durch Messung von Signalstärken und dem Einsatz von Trilateration möglich. In der Praxis wird darüber hinaus oftmals ein Fingerprint-Verfahren unterstützend eingesetzt (Fingerprint bedeutet in diesem Fall, dass jeder Position eine bestimmte Konstellation von Signalstärken zugeordnet wird).

Ultra Wide Band bezeichnet eine Drahtlostechnologie, welche an keine Frequenzen gebunden ist und ebenfalls zur Innen-Positionsbestimmung verwendet werden kann. Die Übertragung der Daten kann auf einem sehr breiten Frequenzspektrum erfolgen, weshalb bereits bestehende Frequenzbänder genutzt werden können. Von Vorteil ist, dass Ultra Wide Band in der Lage ist, Materialen zu durchdringen. Ultra Wide Band kann mit Trilateration als Positionierungssystem verwendet werden, und erreicht unter günstigen Verhältnissen eine hohe Genauigkeiten (bis zu 1,5cm oder besser).

Selbstverständlich können zur Bestimmung der Position auch aus dem Mobilfunk bekannte Techniken zum Einsatz kommen. Dies können z.B. das Verwerten
- erkannter Zellen-IDs,
- von Pfadinformationen und quantisierter Verlust- oder Signalstärkemessungen,
- quantisierter Round Trip Time (RTT, bei (W)CDMA) oder Timing Advance (TA, in GSM),
- des Anstiegs des quantisierten Rauschens, das die Last eines Code Division Multiple Access (CDMA)-Systems anzeigt,
- von Funkverbindungs-Informationen, z.B. des radio access bearer (RAB), und/oder
- von quantisierter Zeit
umfassen.

Es können aber auch andere bekannte Positionsbestimmungs- und Vermessungsverfahren, z.B. aus der Geodäsie, für eine Positionsbestimmung verwendet werden.

Auch ist es möglich, statt eines einzelnen Betriebsgeräts Gruppen, Felder oder andere Organisationseinheiten von Betriebsgeräten und damit Leuchtmitteln mit einer Position zu assoziieren und entsprechende Informationen hierzu zu übertragen.

Zur Positionsbestimmung von Betriebsgeräten für Leuchtmittel ist es z.B. möglich, dass in einem Raum vorhandene Betriebsgeräte ihre relative Position zueinander durch die Verwendung einer Datenfunktechnik, wie z.B. ZigBee, bestimmen können. Die Betriebsgeräte der Leuchtmittel können dann mittels Triangulation, Trilateration und/oder Laufzeitmessung eine Position durch Kommunikation miteinander bestimmen. Die Betriebsgeräte der Leuchtmittel können dazu mit entsprechenden Verarbeitungseinheiten ausgestattet sein. Die Positionen können in Verbindung mit einer absoluten Position, die z.B. durch GPS oder ein anderes Positionierungssystem bestimmt ist, in absolute Positionen umgeformt werden. Auch kann eine absolute Position in einem Betriebsgerät eines Leuchtmittels hinterlegt sein, woraus sich dann die Positionen der anderen Leuchtmittel bestimmen lassen. Bei Übertragung einer absoluten Position durch die Datenfunktechnik können die Betriebsgeräte ihre absolute Position auch selbst bestimmen.

Die absolute Position kann dabei auch Höheninformationen enthalten. Die Höheninformation kann aber auch separat und unabhängig angegeben werden.

Ein Betriebsgerät für ein Leuchtmittel kann aber auch bei der Montage mit einer Betriebsadresse versehen werden, die Positionsdaten umfasst. Dabei kann das Betriebsgerät funktionell bei der Montage mit einem Positionserfassungsgerät verbunden werden, so dass seine aktuelle Position als Betriebsadresse umgesetzt und für das Betriebsgerät in einem Speicher abgelegt werden kann.

Ein Betriebsgerät kann mit einem Leistungswandler ausgestattet sein und ein Speichermedium umfassen. Das Speichermedium kann dabei nicht-flüchtig sein, so dass die in dem Speichermedium gespeicherten Daten nach einem ersten Speichern nicht mehr verändert werden können. Weiter kann das Betriebsgerät ein Verarbeitungsmittel aufweisen, das einen Zugriff auf den Speicher erlaubt. Weiter kann das Betriebsgerät eine Schnittstelle zu einem Kommunikations-Bus aufweisen. Die Verarbeitungsmittel können von dem Kommunikations-Bus erhaltene Informationen erkennen, verarbeiten und/oder auswerten. Insbesondere kann das Verarbeitungsmittel die von dem Kommunikations-Bus erhaltenen Informationen/Anfragen anhand der in dem Speicher gespeicherten Positionsdaten verifizieren/verarbeiten.

Es ist jedoch auch möglich, dass die Position des Betriebsgeräts nach der Montage über ein Replikationssystem in einem Gebäude bestimmt wird (z.B. unter Zuhilfenahme einer oder mehrerer der eingangs beschriebenen Innen-Positionierungstechniken). Das Replikationssystem kann dabei bekannte Referenzpunkte, z.B. absolute Positionen zur Bestimmung der Betriebsgeräteposition mit einbeziehen. Solche bekannten Positionen können z.B. Gebäudekoordinaten sein, die bereits ermittelt wurden (z.B. durch GPS).

Die für das Betriebsgerät gespeicherte Position kann selbst oder in Kombination mit anderen Informationen als Betriebs- oder Kommunikationsadresse verwendet werden. Das Betriebsgerät kann dann von einer Steuereinheit darüber adressiert werden. Beispielweise können die Positionsdaten zusammen mit einer eindeutigen Betriebsgerät/Leuchtmittel-ID verwendet werden.

Die Positionsdaten für ein Betriebsgerät müssen auch nicht notwendigerweise an dem Betriebsgerät gespeichert werden. Es ist auch möglich, z.B. in einer (zentralen) Steuereinheit, die ermittelten Positionsdaten zusammen mit einem eindeutigen Identifikator für jedes Betriebsgerät, z.B. in einer Datenbank oder Look-Up-Tabelle, zu speichern. Damit ist eine Positionsermittlung für ein Betriebsgerät auch bei einem defekten Betriebsgerät möglich.

Weiter ist es möglich, die Position jedes Betriebsgeräts bei der Montage zusammen mit einem eindeutigen Identifikator für jedes Betriebsgerät in dem Positionserfassungsgerät zu erfassen. Diese erfassten Positionsdaten können dann von dem Positionserfassungsgerät z.B. an eine zentrale Steuereinheit übertragen werden. Das Positionserfassungsgerät kann dazu z.B. eine Erfassungsvorrichtung, beispielsweise einen Barcode- oder RFID-Leser aufweisen, die es ermöglicht, den Identifikator eines Betriebsgeräts zu erfassen, um eine Kombination mit den Positionsdaten zu einer Betriebsadresse zu erlauben.

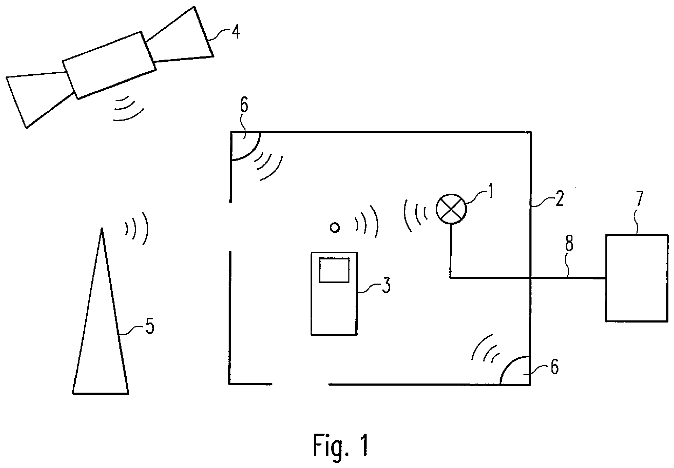

Fig. 1 beschreibt eine exemplarische Anordnung nach einer Ausführungsform der Erfindung: Bei der Montage einer Leuchte mit Betriebsgerät 1 in einem Raum 2 werden mit einem Positionserfassungsgerät 3 Positionsdaten ermittelt. Zur genauen Ermittlung der Position kann das Positionserfassungsgerät 3 dabei Satteliten gestützte Positionierungssyteme 4 (GPS), terrestrische Positionierungshilfen 5, wie z.B. eine Positionsbestimmung anhand von Funkzellen (GSM, CDMA), und/oder für eine Innen-Positionsbestimmung bereitgestellte Systeme 6, wie z.B. Infrarot(-laser)- und/oder Funksysteme, verwenden.

Die von dem Positionserfassungsgerät 3 ermittelte Position wird dann entweder von dem Positionserfassungsgerät 3 an das Betriebsgerät 1 übertragen und dort z.B. mit einem von dem Identifikator als Betriebsadresse gespeichert, oder mit einem von dem Betriebsgerät erfassten Identifikator in dem Positionserfassungsgerät 3 zur späteren Übermittlung an eine Steuereinheit 7 abgelegt. Alternativ kann auch das Betriebsgerät 1 die Positionsdaten an eine Steuereinheit 7 über einen Kommunikationsbus 8 übertragen. Die Position des Betriebsgeräts kann dabei entweder an dem Betriebsgerät 1, oder in der Steuereinheit 7, z.B. mit dem Identifikator des Betriebsgeräts, gespeichert sein. Die Steuereinheit 7 kann das Betriebsgerät dann anhand der Positionsdaten adressieren.

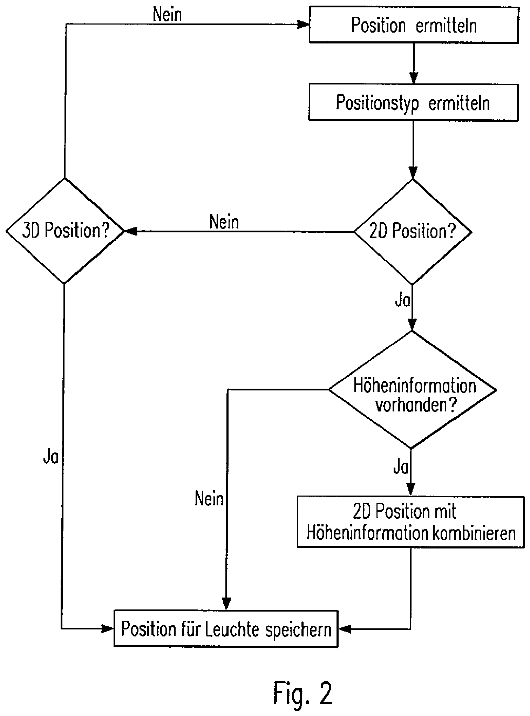

Fig. 2 stellt schematisch eine Positionsermittlung an einem Betriebsgerät dar. Dabei wird exemplarisch für eine Leuchte überprüft, welche Art von Positionsdaten (2D oder 3D-Daten, d.h. Positionsdaten mit oder ohne Höhenangabe) ermittelt wurde. Bei einem Vorliegen von 3D Daten werden die Positionsdaten als Position gespeichert. Liegen lediglich 2D-Daten vor, so wird geprüft, ob Höheninformationen vorliegen. Dies können auch Informationen über Stockwerk(e) oder andere für ein Gebäude definierte Höhenangaben sein. Sind Höheninformationen vorhanden, so werden diese mit den 2D-Daten kombiniert und die Kombination für das Betriebsgerät 1 als Betriebsadresse umgesetzt. Sind keine Höheninformationen verfügbar, so werden lediglich die 2D-Daten gespeichert.

## Patentansprüche

1. Verfahren zur Zuweisung einer Betriebsadresse an ein busfähiges Betriebsgerät (1) für Leuchtmittel,
aufweisend die folgenden Schritte:
- Ermittlung einer absoluten Position oder einer relativen Position des Betriebsgeräts (1) durch ein Positionserfassungsgerät (3),
- Umsetzung der Position in eine Betriebsadresse, die die Position enthält, und
- Abspeichern der Betriebsadresse für das Betriebsgerät (1) in einem Speichermedium des Betriebsgerätes (1), wobei das Betriebsgerät (1) über die Betriebsadresse von einer Steuereinheit adressiert wird.

2. Verfahren nach Anspruch 1, mit dem Schritt:
- Übertragung der Betriebsadresse an ein Speichermedium einer Steuereinheit (7).

3. Verfahren nach Anspruch 1 oder 2, wobei das Betriebsgerät (1) Positionsdaten mit anderen Betriebsgeräten austauscht.

4. Verfahren nach einem der vorgehenden Ansprüche, wobei das Speichermedium einen zusätzlichen Identifikator des Betriebsgerätes (1) speichert.

5. Verfahren nach einem der vorgehenden Ansprüche, mit den folgenden Schritten:
- bestimmen ob die ermittelte Position eine 2D-Position oder eine 3D-Position ist,
- im Fall einer 2D-Position: prüfen ob Höheninformationen vorliegen und bei einem Vorliegen kombinieren der Höheninformation mit der 2D-Position und Speichern der Kombination in dem Speichermedium.

6. Verfahren zur Ermittlung der Positionen von Betriebsgeräten (1) für Leuchtmittel in einem Bussystem,
aufweisend die Schritte:
- Zuweisung einer Betriebsadresse an ein Betriebsgerät (1) durch ein Verfahren nach einem der Ansprüche 1-5, und
- Auslesen der Betriebsadresse und Umsetzung der ausgelesenen Adresse in eine Position einer Leuchte, der das Betriebsgerät (1) zugeordnet ist.

7. Busfähiges Betriebsgerät (1) für Leuchtmittel,
aufweisend
- Mittel zur Ermittelung der absoluten oder relativen Position des Betriebsgeräts (1) und/oder eine Schnittstelle zur Kommunikation mit einem externen Positionserfassungsgerät (3),
- Mittel zur Umsetzung der erfassten bzw. übermittelten Position in eine Betriebsadresse, die die Position enthält, und
- ein Speichermedium zum Speichern der Betriebsadresse, wobei das Betriebsgerät (1) über die Betriebsadresse von einer Steuereinheit adressiert werden kann.

8. Betriebsgerät (1) nach Anspruch 7, wobei das Betriebsgerät (1) Signalisierungsmittel für Funk- und/oder Lichtsignale aufweist.

9. Betriebsgerät (1) nach Anspruch 7 oder 8, wobei das Betriebsgerät (1) ein Verarbeitungsmittel aufweist, das mit den Schnittstellen verbunden ist und dazu eingerichtet ist, aus über die Schnittstellen erhaltenen Daten Positionsdaten zu bestimmen.

10. Betriebsgerät (1) nach einem der Ansprüche 7 bis 9, wobei das Betriebsgerät (1) dazu eingerichtet ist, über den Kommunikations-Bus (8) mit anderen Betriebsgeräten und/oder einer Steuereinheit (7) Positionsdaten auszutauschen.

11. Betriebsgerät (1) nach einem der Ansprüche 7 bis 10, wobei das Betriebsgerät (1) dazu eingerichtet ist, über die Signalisierungsmittel mit anderen Betriebsgeräten Positionsdaten auszutauschen.

12. Betriebsgerät (1) nach einem der Ansprüche 7 bis 11, wobei das Betriebsgerät (1) über eine Schnittstelle mit dem Positionserfassungsgerät (3) verbindbar ist.

13. Positionierungssystem zur Bestimmung einer Position eines Betriebsgerätes (1) für ein Leuchtmittel mit einem Betriebsgerät (1) nach einem der Ansprüche 7-12 und einem Positionserfassungsgerät (3) zur Bestimmung einer Position eines Betriebsgerätes (1) für ein Leuchtmittel, wobei das Positionserfassungsgerät (3) aufweist
- eine Positionierungseinheit zum Ermitteln von Positionsdaten, wobei die Positionierungseinheit vorzugsweise ein Signalempfänger für Funk- und/oder Lichtsignale und/oder ein GPS-Empfänger ist, und
- ein Kommunikationsmodul zum Übertragen der Positionsdaten an das Betriebsgerät (1).

14. Positionierungssystem nach Anspruch 13, wobei das Kommunikationsmodul dazu eingerichtet ist, Positionsdaten von Betriebsgeräten (1) in einem Bereich abzufragen und/oder Positionen der Betriebsgeräte (1) anhand der Positionsdaten auf einer Anzeige darzustellen.

15. Positionierungssystem nach Anspruch 13 oder 14, wobei das Positionserfassungsgerät (3) dazu eingerichtet ist, die Positionen der Betriebsgeräte (1) in Verbindung mit einem Umgebungs-, Raum- und/oder Lageplan darzustellen.

16. Positionierungssystem nach Anspruch einem der Ansprüche 13 bis 15, wobei das Positionierungssystem dazu eingerichtet ist, ein Verfahren nach einem der Ansprüche 1-6 auszuführen.

## Claims

1. Method for assigning an operating address to a bus-capable operating device (1) for lamps,
comprising the following steps:
- determining an absolute position or a relative position of the operating device (1) by means of a position detection device (3),
- converting the position into an operating address, which includes the position, and
- storing the operating address for the operating device (1) in a storage medium of the operating device (1), wherein the operating device (1) is addressed by a control unit via the operating address.

2. Method according to Claim 1, comprising the step:
- transmission of the operating address to a storage medium of a control unit (7).

3. Method according to Claim 1 or 2, wherein the operating device (1) exchanges position data with other operating devices.

4. Method according to any one of the preceding Claims, wherein the storage medium stores an additional identifier for the operating device (1).

5. Method according to any one of the preceding Claims, comprising the following steps:
- determining whether the detected position is a 2D position or a 3D position,
- if the position is a 2D position: checking whether level information is available and, if level information is available, combining said level information with the 2D position and storing the combination in the storage medium.

6. Method for determining the positions of operating devices (1) for lamps in a bus system,
comprising the steps:
- assigning an operating address to an operating device (1) by means of a method according to any one of Claims 1-5, and
- reading the operating address and converting the read address into a position of a lamp associated with the operating device (1).

7. Bus-capable operating device (1) for lamps,
comprising
- means for determining the absolute or relative position of the operating device (1) and/or an interface for communicating with an external position detection device (3),
- means for converting the detected or transmitted position into an operating address, which includes the position, and
- a storage medium for storing the operating address, wherein the operating device (1) can be addressed by a control unit via the operating address.

8. Operating device (1) according to Claim 7, wherein the operating device (1) comprises signaling means for radio signals and/or light signals.

9. Operating device (1) according to Claim 7 or 8, wherein the operating device (1) comprises processing means, which are connected to the interfaces and are configured to determine position data from data obtained via the interfaces.

10. Operating device (1) according to any one of Claims 7 to 9, wherein the operating device (1) is configured to exchange position data with other operating devices and/or a control unit (7) via the communication bus (8).

11. Operating device (1) according to any one of Claims 7 to 10, wherein the operating device (1) is configured to exchange position data with other operating devices via the signaling means.

12. Operating device (1) according to any one of Claims 7 to 11, wherein the operating device (1) can be connected to the position detection device (3) via an interface.

13. Positioning system for determining a position of an operating device (1) for a lamp comprising an operating device (1) according to any one of Claims 7-12 and a position detection device (3) for determining a position of an operating device (1) for a lamp, wherein the position detection device (3) comprises:
- a positioning unit for determining position data, wherein the positioning unit is preferably a signal receiver for radio signals and/or light signals and/or a GPS receiver, and
- a communication module for transmitting the position data to the operating device (1).

14. Positioning system according to Claim 13, wherein the communication module is configured to query position data of operating devices (1) in an area and/or positions of the operating devices (1) on a display on the basis of the position data.

15. Positioning system according to Claim 13 or 14, wherein the position detection device (3) is configured to present the positions of the operating devices (1) in conjunction with a surroundings plan, a floor plan, and/or a site plan.

16. Positioning system according to any one of Claims 13 to 15, wherein the positioning system is configured to carry out a method according to any one of Claims 1-6.

## Revendications

1. Procédé d'affectation d'adresse fonctionnelle à un appareil d'alimentation (1) compatible bus destiné à des sources lumineuses,
présentant les étapes suivantes :
- détermination d'une position absolue ou d'une position relative de l'appareil d'alimentation (1) par l'intermédiaire d'un appareil de détection de position (3),
- conversion de la position en une adresse fonctionnelle contenant la position, et
- mémorisation de l'adresse fonctionnelle relative à l'appareil d'alimentation (1) dans un support de stockage de l'appareil d'alimentation (1), une unité de commande adressant l'appareil d'alimentation (1) par l'intermédiaire de l'adresse fonctionnelle.

2. Procédé selon la revendication 1, comprenant l'étape de :
- transmission de l'adresse fonctionnelle à un support de stockage d'une unité de commande (7).

3. Procédé selon la revendication 1 ou 2, dans lequel l'appareil d'alimentation (1) échange des données de position avec d'autres appareils d'alimentation.

4. Procédé selon l'une des revendications précédentes, dans lequel le support de stockage mémorise un identifiant supplémentaire de l'appareil d'alimentation (1).

5. Procédé selon l'une des revendications précédentes, comprenant les étapes suivantes :
- détermination du fait que la position détectée est une position 2D ou une position 3D,
- dans le cas d'une position 2D : vérification du fait que des informations de hauteur sont présentes et, si tel est le cas, combinaison des informations de hauteur avec la position 2D, et mémorisation de la combinaison dans le support de stockage.

6. Procédé de détermination des positions d'appareils d'alimentation (1) destinés à des sources lumineuses dans un système de bus,
présentant les étapes :
- affectation d'une adresse fonctionnelle à un appareil d'alimentation (1) par le biais du procédé selon l'une des revendications 1 à 5, et
- lecture de l'adresse fonctionnelle et conversion de l'adresse lue en une position d'une lampe associée à l'appareil d'alimentation (1).

7. Appareil d'alimentation (1) compatible bus, destiné à des sources lumineuses, présentant :
- un moyen de détermination de la position absolue ou relative de l'appareil d'alimentation (1) et/ou une interface permettant une communication avec un appareil de détection de position (3) externe,
- un moyen de conversion de la position détectée ou transmise en une adresse fonctionnelle contenant la position, et
- un support de stockage pour la mémorisation de l'adresse fonctionnelle, une unité de commande pouvant adresser l'appareil d'alimentation (1) par l'intermédiaire de l'adresse fonctionnelle.

8. Appareil d'alimentation (1) selon la revendication 7, dans lequel l'appareil d'alimentation (1) présente des moyens de signalisation pour des signaux radio et/ou lumineux.

9. Appareil d'alimentation (1) selon la revendication 7 ou 8, dans lequel l'appareil d'alimentation (1) présente un moyen de traitement relié à l'interface et conçu pour déterminer des données de position à partir de données obtenues par le biais de l'interface.

10. Appareil d'alimentation (1) selon l'une des revendications 7 à 9, dans lequel l'appareil d'alimentation (1) est conçu pour échanger des données de position par le biais du bus de communication (8) avec d'autres appareils d'alimentation et/ou avec une unité de commande (7).

11. Appareil d'alimentation (1) selon l'une des revendications 7 à 10, dans lequel l'appareil d'alimentation (1) est conçu pour échanger des données de position avec d'autres appareils d'alimentation par l'intermédiaire des moyens de signalisation.

12. Appareil d'alimentation (1) selon l'une des revendications 7 à 11, dans lequel l'appareil d'alimentation (1) peut être relié à l'appareil de détection de position (3) par l'intermédiaire d'une interface.

13. Système de positionnement destiné à déterminer une position d'un appareil d'alimentation (1) destiné à une source lumineuse, comprenant un appareil d'alimentation (1) selon l'une des revendications 7 à 12 et un appareil de détection de position (3) destiné à déterminer une position d'un appareil d'alimentation (1) destiné à une source lumineuse, dans lequel l'appareil de détection de position (3) présente
- une unité de positionnement destinée à déterminer des données de position, l'unité de positionnement consistant de préférence en un récepteur de signal pour des signaux radio et/ou lumineux et/ou un récepteur GPS, et
- un module de communication destiné à transmettre les données de position à l'appareil d'alimentation (1).

14. Système de positionnement selon la revendication 13, dans lequel le module de communication est conçu pour demander les données de position des appareils d'alimentation (1) situés dans une zone et/ou représenter sur un dispositif d'affichage les positions des appareils d'alimentation (1) à l'aide des données de position.

15. Système de positionnement selon la revendication 13 ou 14, dans lequel l'appareil de détection de position (3) est conçu pour représenter les positions des appareils d'alimentation (1) en liaison avec un plan de situation, d'espace et/ou d'environnement.

16. Système de positionnement selon une revendication parmi les revendications 13 à 15, dans lequel le système de positionnement est conçu pour réaliser un procédé selon l'une des revendications 1 à 6.
